# EUROPÄISCHE PATENTSCHRIFT

(11) **EP 4 052 931 B1**
(45) Veröffentlichungstag und Bekanntmachung des Hinweises auf die Patenterteilung: **27.12.2023**
(21) Anmeldenummer: 22158150.7
(22) Anmeldetag: 23.02.2022
(51) Int. Cl.: B60C 27/02, B60C 27/06, B60C 27/20

(54) **VERBINDUNGSGLIED ZUR BEFESTIGUNG EINER GLEITSCHUTZVORRICHTUNG AN EINEM FAHRZEUGRAD**
CONNECTION PIECE FOR FIXING AN ANTI-SKID DEVICE TO A VEHICLE WHEEL
ÉLÉMENT D'ASSEMBLAGE DESTINÉ À LA FIXATION D'UN DISPOSITIF ANTIPATINAGE À UNE ROUE DE VÉHICULE

(30) Priorität: 01.03.2021 DE 102021104882
(43) Veröffentlichungstag der Anmeldung: 07.09.2022
(73) Patentinhaber: RUD Ketten Rieger & Dietz GmbH u. Co. KG, 73432 Aalen (DE)
(72) Erfinder: Neri, Marco Arrigoni, 22046 Merone (IT); Farina, Luigi, 23843 Dolzago (IT)
(74) Vertreter: Grünecker Patent- und Rechtsanwälte PartG mbB

(56) Entgegenhaltungen:
- EP-A1- 3 736 144
- EP-A2- 0 226 899
- DE-C1- 3 844 491
- DE-T2- 69 201 574

## Beschreibung

Die Erfindung betrifft ein Verbindungsglied zur Befestigung einer Gleitschutzvorrichtung an einem Fahrzeugrad, insbesondere an einem mit einem Haltemittel versehenen Fahrzeugrad, wobei das Verbindungsglied einen zur Handhabung durch einen Anwender ausgestalteten Handhabungsabschnitt und einen zur Anbringung des Verbindungsglieds am Fahrzeugrad ausgestalteten Einhängeabschnitt aufweist, wobei der Einhängeabschnitt an einem radseitigen Ende des Verbindungsglieds angeordnet ist und einen Haken aufweist, und wobei der Handhabungsabschnitt sich zwischen dem Einhängeabschnitt und einem dem radseitigen Ende gegenüberliegenden gleitschutzvorrichtungsseitigen Ende des Verbindungsglieds befindet. Die Erfindung betrifft zudem eine Gleitschutzvorrichtung und einen Satz umfassend eine Gleitschutzvorrichtung.

Gleitschutzvorrichtungen für Fahrzeugräder sind bekannt. Hierzu zählen insbesondere Schneeketten und andere Traktionshilfsmittel. Die Montage von Gleitschutzvorrichtungen an Fahrzeugrädern erfolgt häufig unter schwierigen Bedingungen, insbesondere bei Schneefall, Kälte oder Dunkelheit. Es ist daher wünschenswert, die Montage einer Gleitschutzvorrichtung für einen Anwender so schnell und einfach wie möglich zu gestalten. Gleichzeitig soll die Gleitschutzvorrichtung sicher am Fahrzeugrad gehalten sein.

Aus der EP 3 736 144 A1 ist eine Gleitschutzvorrichtung bekannt, die einen zentralen Körper, mit dem sie über einen Verankerungsbügel an der Felge befestigt werden kann, aufweist. Zur Montage wird zunächst der Verankerungsbügel an der Felge moniert. Am Verankerungsbügel ist ein Haken angebracht, der in eine Öse am zentralen Körper eingehängt werden kann. Aus der EP 0 226 899 A2 ist eine Rutschsicherungsvorrichtung für Fahrzeugräder bekannt, die einen Mittelteil, mehrere davon ausgehende Arme, eine auf den Armen angebrachte Schneekette und eine Einziehvorrichtung aufweist, um die Rutschsicherungsvorrichtung aus einer Montagelage in eine Funktionslage einzuziehen. Der Mittelteil wird mittels Riemen an der Felge befestigt. Am Ende jedes Riemens ist ein Haken angebracht, der in eine Öffnung in der Felge eingehängt werden kann. Aus der DE 38 44 491 C1 ist eine Gleitschutzvorrichtung für Fahrzeugräder bekannt. Die Gleitschutzvorrichtung besitzt eine an der Radaußenseite im Bereich der Radachse angeordnete, am Rad befestigbare und gegenüber dem Rad drehbare Halterung für mindestens ein im montierten Zustand der Gleitschutzvorrichtung sich radial erstreckendes Halteelement zum Halten von Gleitschutzmitteln, wobei die Halterung unter Federeinwirkung durch eine Zugfeder gegen das Rad gezogen wird. Aus der DE 692 01 574 T2 ist eine Gleitschutzvorrichtung für ein Fahrzeugrad bekannt. Die Gleitschutzvorrichtung ist mit einem Gehäuse, welches löslich an der Außenseite eines Rades befestigt wird, versehen, wobei dieses Gehäuse radiale Arme trägt, an deren äußerem Ende eine rutschfeste Lauffläche angeordnet ist, und das mit elastischen Zugmitteln verbunden ist, welche dieses Gehäuse in der Achse des Rades in dessen Richtung so ziehen können, dass die Lauffläche auf dem Umfang des Rades angeordnet wird. Das Zugmittel kann als Schraubenfeder ausgestaltet sein.

Es ist daher die Aufgabe der Erfindung, ein Verbindungsglied zur Befestigung einer Gleitschutzvorrichtung an einem Fahrzeugrad bereitzustellen, durch das eine schnelle und einfache Montage der Gleitschutzvorrichtung am Fahrzeugrad möglich ist.

Die erfindungsgemäße Aufgabe wird für das Verbindungsglied der oben genannten Art dadurch gelöst, dass der Haken ein Maul zur Aufnahme des einen Abschnitts des Fahrzeugrads und einen Schließmechanismus zum Schließen des Mauls aufweist. Die eingangs genannte Gleitschutzvorrichtung weist eine zentrale Befestigungseinrichtung auf, die im auf dem Fahrzeugrad montierten Zustand gegenüber einer Radnabe des Fahrzeugrads angeordnet ist, und ein Verbindungsglied im Sinne der Erfindung aufweist.

Die vorgenannte Lösung der erfindungsgemäßen Aufgabe erlaubt es, eine Gleitschutzvorrichtung schnell und einfach mit einem Fahrzeugrad zu verbinden. Durch den Haken im Einhängeabschnitt des Verbindungsgliedes kann eine schnelle Verbindung zum Fahrzeugrad durch einfaches Einhängen hergestellt werden. Durch den Handhabungsabschnitt am Verbindungsglied ist zudem die Handhabung erleichtert, weil das Verbindungsglied im Handhabungsabschnitt vom Anwender gehalten, in Bezug auf das Fahrzeugrad ausgerichtet und anschließend eingehängt werden kann. Der Schließmechanismus erlaubt es, die Montage des Verbindungsgliedes einfach zu gestalten und gewährleistet eine sichere Verbindung zwischen dem Verbindungsglied und dem Fahrzeugrad. Der Schließmechanismus kann manuell oder automatisch betätigbar ein.

Das Verbindungsglied eignet sich insbesondere für ein Fahrzeugrad, welches mit einem Haltemittel versehen ist. Das Haltemittel kann beispielsweise ein Bolzen, eine Öse, ein Ring oder eine Strebe sein. Solch ein Haltemittel kann als Teil des Fahrzeugrads oder der Radnabe gebildet sein.

Alternativ ist es möglich, ein Fahrzeugrad mit einem separaten Zubehöradapter zu versehen, welcher ein geeignetes Haltemittel, insbesondere einen Bolzen, aufweist und zur Montage der Gleitschutzvorrichtung bereitstellt.

Der eingangs genannte Satz umfasst eine erfindungsgemäße Gleitschutzvorrichtung und einen solchen Zubehöradapter. Der Zubehöradapter kann vor der Montage der Gleitschutzvorrichtung am Fahrzeugrad angebracht werden und auch an diesem verbleiben, wenn keine Gleitschutzvorrichtung verwendet wird.

Die erfindungsgemäße Lösung kann durch verschiedene, jeweils für sich vorteilhafte und beliebig miteinander kombinierbare Ausgestaltungen weiter verbessert werden. Auf diese Ausführungsformen und die mit ihnen verbundenen Vorteile ist im Folgenden eingegangen.

Das Verbindungsglied kann mit wenigstens einem Verbindungsmittel versehen sein, das ausgestaltet ist, das Verbindungsglied mit der Gleitschutzvorrichtung zu verbinden. Das Verbindungsmittel kann biegeschlaff oder starr sein.

Ein biegeschlaffes Verbindungsmittel kann beispielsweise ein Seil, eine Kette, einen Gurt oder einen Strang aufweisen. Ein starres Verbindungsmittel kann beispielsweise als Stange, Hohlzylinder oder Rahmenstruktur gebildet sein.

Das Verbindungsmittel ist bevorzugt zur Aufnahme von Zugkräften ausgestaltet. Dies ist besonders für den Fall vorteilhaft, wenn die Gleitschutzvorrichtung eine sogenannte selbstaufziehende Gleitschutzvorrichtung ist und mit federelastischen Auslegern versehen ist, die ein Laufnetz der Gleitschutzvorrichtung mit der zentralen Befestigungseinrichtung verbinden. An der zentralen Befestigungseinrichtung im radialen Zentrum der Gleitschutzvorrichtung können sich die Ausleger abstützen, um das Laufnetz auf der Lauffläche des Fahrzeugrads zu halten. Die zentrale Befestigungseinrichtung wird dadurch mit einer Zugkraft beaufschlagt, die dazu strebt, die Befestigungseinrichtung von der Radnabe wegzuziehen. Da die Gleitschutzvorrichtung jedoch über das Verbindungsmittel und das übrige Verbindungsglied in einem montierten Zustand an der Radnabe gehalten ist, wird die Befestigungseinrichtung entlang einer axialen Richtung des Fahrzeugrads in ihrer Position gehalten.

Um auf einfache Weise einen automatischen Schließmechanismus zu erhalten, kann der Schließmechanismus eine Schließfalle zum automatischen Schließen des Mauls umfassen.

Insbesondere kann eine solche Schließfalle eine Hakenfalle sein. Die Hakenfalle kann im Verbindungsglied, insbesondere im Haken desselben, angeordnet und dazu ausgestaltet sein, das Maul des Hakens zu schließen. Ein Abschnitt des Fahrzeugrads, insbesondere ein Haltemittel, kann die Hakenfalle öffnen, wenn der Abschnitt des Fahrzeugrads, insbesondere das Haltemittel in das Maul des Hakens geführt wird. Ist der Abschnitt des Fahrzeugrads, insbesondere das Haltemittel, im Maul angeordnet, kann die Hakenfalle geschlossen werden. Hierzu kann diese bevorzugt einen federelastischen Rückstellmechanismus aufweisen. Der federelastische Rückstellmechanismus umfasst bevorzugt ein Federelement, insbesondere eine Stahlfeder.

Alternativ zu einer Ausgestaltung mit einer Hakenfalle kann der Haken des Verbindungsgliedes auch als Schnapphaken, beispielsweise als Karabiner ausgestaltet sein.

Um das Öffnen des Schließmechanismus zu ermöglichen, kann der Schließmechanismus mit einem Öffnungsmechanismus verbunden sein, der ausgestaltet ist, das Maul des Hakens zu öffnen. Der Öffnungsmechanismus kann dazu wenigstens ein von außen zugängliches Betätigungsmittel umfassen. Das Betätigungsmittel kann mit dem Öffnungsmechanismus und/oder der Schließfalle so zusammenwirken, dass die Betätigung des Betätigungsmittels zum Öffnen des Hakenmauls führt. Bevorzugt lässt sich das Betätigungsmittel von einer axialen Außenseite der Gleitschutzvorrichtung betätigen, um die Anwendung zu erleichtern. Alternativ dazu kann das Betätigungsmittel auch am Handhabungsabschnitt angeordnet sein.

Das Maul des Hakens kann zu einer zumindest abschnittsweise zum Handhabungsabschnitt hinweisenden Montagerichtung offen sein. In diesem Fall muss der Haken zunächst ein Stück weit hinter den Abschnitt des Fahrzeugrads bewegt werden, in den er eingehängt werden soll. Anschließend wird der Abschnitt des Fahrzeugrads in das Maul des Hakens geführt und ein Zug am Haken in Richtung vom Fahrzeugrad weg führt den Abschnitt des Fahrzeugrads bis zum Grund des Hakenmauls.

Alternativ dazu kann der Haken ein Maul aufweisen, das zu einer vom Handhabungsabschnitt wegweisenden Montagerichtung hin offen ist. Mit anderen Worten kann das Maul zum Fahrzeugrad hin offen sein. Ein solcher Haken kann auf einfache Weise mit dem Fahrzeugrad verbunden werden. Er muss lediglich entlang der axialen Richtung des Fahrzeugrads zu diesem geführt werden, wobei ein Abschnitt des Fahrzeugrads, insbesondere ein Haltemittel, in das Hakenmaul geführt wird. Insbesondere solch ein Haken ist bevorzugt mit einer Schließfalle ausgestaltet um den im Hakenmaul befindlichen Abschnitt des Fahrzeugrads sicher zu halten.

Um das Zusammenführen des Hakens mit einem Abschnitt des Fahrzeugrads weiter zu erleichtern, kann das Maul eine zumindest abschnittsweise V-förmige Öffnung aufweisen. Eine solche Öffnung kann es erlauben, den Haken relativ zum Abschnitt des Fahrzeugrads bei der Montage automatisch zu drehen, sodass der Abschnitt des Fahrzeugrads leicht in das Maul des Hakens hineingeführt werden kann.

Das Verbindungsglied weist im Handhabungsabschnitt bevorzugt einen ergonomisch ausgestalteten Griff auf. Ergonomisch soll dabei eine ausreichend große Dicke bedeuten, durch die sich das Verbindungsglied im Handhabungsabschnitt auch unter erschwerten Bedingungen, insbesondere mit Handschuhen, sicher greifen lässt. Beispielsweise kann die Dicke des Verbindungsgliedes im Handhabungsabschnitt mindestens der zweifachen Dicke der Maulweite des Hakens betragen. Bevorzugt liegt die Dicke zwischen 2 und 8 cm.

Um die Ergonomie weiter zu verbessern und um einen kompakten Aufbau zu erhalten, kann der Handhabungsabschnitt im Wesentlichen zylindrisch sein und der Haken in einer radialen Richtung, bezogen auf den Zylinder, nicht über den Handhabungsabschnitt hinausragen.

Bei der erfindungsgemäßen Gleitschutzvorrichtung ist das Verbindungsglied an seinem gleitschutzvorrichtungsseitigen Ende an der zentralen Befestigungseinrichtung angebracht.

Bevorzugt umfasst die zentrale Befestigungseinrichtung eine Spannvorrichtung, die ausgestaltet ist, eine Zugkraft auf das Verbindungsglied auszuüben. Mit anderen Worten kann die Spannvorrichtung das Verbindungsglied in Richtung zur übrigen Befestigungseinrichtung ziehen. Wenn das Verbindungsglied mit einem biegeschlaffen Verbindungsmittel versehen ist, kann die Spannvorrichtung insbesondere dazu ausgestaltet sein, dass Verbindungsmittel aufzuwickeln. Ist das Verbindungsmittel dagegen starr, kann die Spannvorrichtung dazu ausgestaltet sein, dass Verbindungsmittel über einen geeigneten Antrieb zu ziehen.

Bevorzugt sind das Verbindungsglied, zumindest mit seinem Einhängeabschnitt, und die restliche Gleitschutzvorrichtung um eine axiale Richtung relativ zueinander drehbar ausgestaltet. Dadurch kann das Verbindungsglied auf einfache Weise in Bezug auf den Abschnitt des Fahrzeugrads, an dem es befestigt werden soll, ausgerichtet werden. Bevorzugt ist das Verbindungsglied drehbar an der zentralen Befestigungseinrichtung gehalten. Gemäß einer weiteren Ausgestaltung kann die zentrale Befestigungseinrichtung einen von außen betätigbaren Drehmechanismus aufweisen, durch den das Verbindungsglied drehbar ist.

Das Verbindungsglied ist bevorzugt, bezogen auf eine radiale Richtung der Gleitschutzvorrichtung, mittig in der Gleitschutzvorrichtung angeordnet ist. Mit anderen Worten ist es in radialer Richtung im Zentrum liegend angeordnet. Die radiale Richtung bezieht sich dabei auf die radiale Richtung der Gleitschutzvorrichtung, welche mit einer radialen Richtung des Fahrzeugrads zusammenfällt, wenn die Gleitschutzvorrichtung am Fahrzeugrad befestigt ist.

Der eingangs genannte erfindungsgemäße Satz umfasst eine Gleitschutzvorrichtung mit einem erfindungsgemäßen Verbindungsglied sowie einen Zubehöradapter zur Montage an einem Fahrzeugrad oder eine Radnabe, wobei der Zubehöradapter wenigstens ein Haltemittel aufweist, das zur Verbindung mit dem Haken des Verbindungsglieds der Gleitschutzvorrichtung ausgestaltet ist.

Der Zubehöradapter kann beispielsweise dazu ausgestaltet sein, an einer Radschraube oder einer Radmutter befestigt zu werden. Alternativ dazu kann ein Zubehöradapter dazu ausgestaltet sein, in einer Mittenbohrung einer Fahrzeugfelge verklemmt zu werden. Eine weitere Alternative für einen Zubehöradapter besteht darin, dass der Zubehöradapter ein Gewinde aufweist, mit dem er an einem Zentralgewinde der Fahrzeugfelge oder der Radnabe befestigt werden kann.

Im Folgenden ist die Erfindung beispielhaft anhand vorteilhafter Ausführungsformen mit Bezug auf die Zeichnungen näher erläutert. Die bei den Ausführungsformen beispielhaft dargestellten Merkmalskombinationen können nach Maßgabe der obigen Ausführungen entsprechend den für einen bestimmten Anwendungsfall notwendigen Eigenschaften des erfindungsgemäßen Verbindungsglieds durch weitere Merkmale ergänzt werden. Auch können, ebenfalls nach Maßgabe der obigen Ausführungen, einzelne Merkmale bei der beschriebenen Ausführungsform weggelassen werden, wenn es auf die Wirkung dieses Merkmals in einem konkreten Anwendungsfall nicht ankommt. In den Zeichnungen werden für Elemente gleicher Funktion und/oder gleichen Aufbaus stets dieselben Bezugszeichen verwendet.

Es zeigen:
- Fig. 1: eine perspektivische Darstellung eines Fahrzeugrads und einer Gleitschutzvorrichtung vor der Montage;
- Fig. 2 bis 4: verschiedene Zubehöradapter mit Haltemitteln zur Montage des Verbindungsglieds;
- Fig. 5: eine erste Ausführungsform eines Verbindungsglieds vor der Montage;
- Fig. 6: das Verbindungsglied aus Fig. 5 in einem an einem mit einem Zubehöradapter aus Fig. 3 versehenen Fahrzeugrad montierten Zustand;
- Fig. 7: das Verbindungsglied aus Fig. 5 in einem an einem mit einem Zubehöradapter aus Fig. 2 versehenen Fahrzeugrad montierten Zustand;
- Fig. 8: das Verbindungsglied aus Fig. 5 in einem an einem mit einem Zubehöradapter aus Fig. 4 versehenen Fahrzeugrad montierten Zustand;
- Fig. 9: eine zweite Ausführungsform eines Verbindungsglieds in einer perspektivische Darstellung;
- Fig. 10: das Verbindungsglied aus Fig. 9 vor der Montage;
- Fig. 11: das Verbindungsglied aus Fig. 9 in einem an einem mit einem Zubehöradapter aus Fig. 3 versehenen Fahrzeugrad montierten Zustand;
- Fig. 12: eine dritte Ausführungsform eines Verbindungsglieds in einer perspektivische Darstellung gemäß der Erfindung;
- Fig. 13: das Verbindungsglied aus Fig. 12 vor der Montage;
- Fig. 14: das Verbindungsglied aus Fig. 12 in einem an einem mit einem Zubehöradapter aus Fig. 3 versehenen Fahrzeugrad montierten Zustand;
- Fig. 15 - 18: das Verbindungsglied aus Fig. 12 in halbtransparenten Darstellungen von verschiedenen Zuständen.

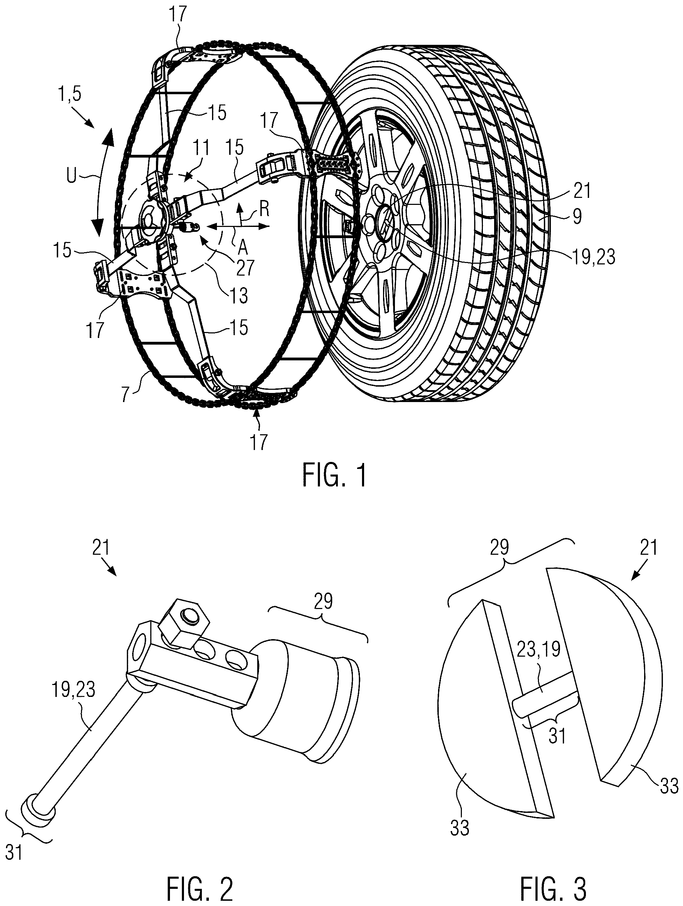

Im Folgenden ist zunächst eine Gleitschutzvorrichtung 1 für ein Fahrzeugrad 3 mit Bezug auf die Fig. 1 beschrieben.

Die Gleitschutzvorrichtung 1 kann insbesondere eine Schneekette 5 sein. Die Gleitschutzvorrichtung 1 kann ein Laufnetz 7 aufweisen, welches zur Auflage auf der Lauffläche 9 des Fahrzeugrads 3 ausgestaltet ist. In einem am Fahrzeugrad 3 montierten Zustand 71 der Gleitschutzvorrichtung 1 liegt das Laufnetz 7 auf der Lauffläche 9.

Das in Fig. 1 dargestellte Laufnetz 7 dient lediglich der Anschauung. D.h., es kann auch anders ausgestaltet sein. Das Laufnetz 7 kann beispielsweise aus Kettensträngen, Traktionsstegen, Seilen, Matten oder anderen geeigneten Elementen aufgebaut sein.

Die Gleitschutzvorrichtung 1 folgt in ihrer Form im Wesentlichen der Form des Fahrzeugrads 3. D.h., zumindest das Laufnetz 7 erstreckt sich entlang einer Umfangsrichtung U im Wesentlichen kreisförmig um eine axiale Richtung A. Durch die axiale Richtung A ist auch eine quer dazu verlaufende radiale Richtung R vorgegeben.

In einem am Fahrzeugrad 3 montierten Zustand 71 fallen die Umfangsrichtung U, die axiale Richtung A und die radiale Richtung R mit den entsprechenden Richtungen des Fahrzeugrads 3 zusammen.

Die Gleitschutzvorrichtung 1 weist eine zentrale Befestigungseinrichtung 11 auf, welche zur Montage der Gleitschutzvorrichtung 1 am Fahrzeugrad 3 dient. Die Befestigungseinrichtung 11 liegt in Bezug auf die radiale Richtung R im Bereich der Mitte 13 der Gleitschutzvorrichtung 1. Von der zentralen Befestigungseinrichtung 11 erstrecken sich radiale Ausleger 15, jeweils entlang der radialen Richtung R, die an ihren der zentralen Befestigungseinrichtung 11 gegenüberliegenden Enden 17 mit dem Laufnetz 7 verbunden sind. Die radialen Ausleger 15 sind bevorzugt federelastisch ausgestaltet.

Das Fahrzeugrad 3, an dem die Gleitschutzvorrichtung 1 befestigt werden soll, ist bevorzugt mit einem Haltemittel 19 versehen, welches insbesondere Teil eines Zubehöradapters 21 sein kann. Alternativ dazu kann das Fahrzeugrad 3 auch so geformt sein, dass eine Montage ohne Zubehöradapter 21 möglich ist. Das Haltemittel 19 ist dann durch einen Abschnitt des Fahrzeugrads 3 gebildet.

Der Zubehöradapter 21 kann fest am Fahrzeugrad 3 oder an der Radnabe (hier nicht gezeigt), befestigt werden, um das Haltemittel 19 bereitzustellen. Auf verschiedene beispielhafte Ausführungsformen von Zubehöradaptern 21 ist weiter unten mit Bezug auf die Figuren 2 bis 4 eingegangen. Die Gleitschutzvorrichtung 1 und der Zubehöradapter 21 können Teil eines Satzes 25 sein. Beispielsweise kann eine Gleitschutzvorrichtung 1 zusammen mit einem Zubehöradapter 21 als Satz 25 vertrieben werden, wobei der Satz 25 auch noch weitere Teile umfassen kann.

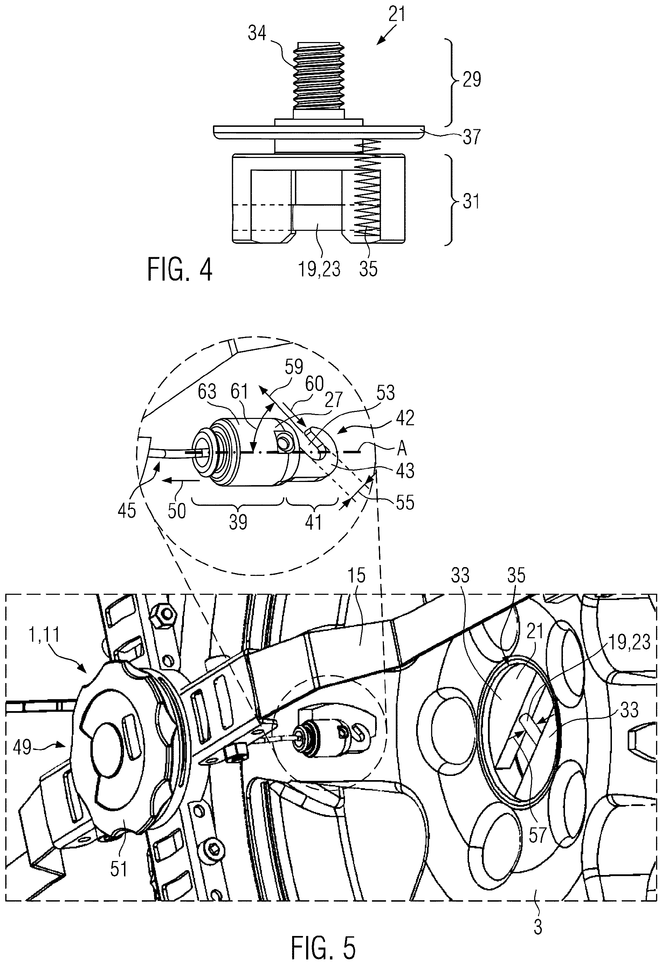

Das Haltemittel 19 kann insbesondere ein Bolzen 23 sein. Alternativ dazu sind auch andere Haltemittel 19 möglich, beispielsweise Ringe, Ösen oder Stege. Das Haltemittel 19 dient zur Anbringung eines erfindungsgemäßen Verbindungsglieds 27 am Fahrzeugrad 3. Das Verbindungsglied 27 kann an der zentralen Befestigungseinrichtung 11 angebracht oder ein Teil derselben sein. Auf den allgemeinen Aufbau des Verbindungsglieds 27, die verschiedenen Ausgestaltungsformen und deren Anwendung ist später mit Bezug auf die Figuren 5 bis 18 eingegangen.

Im Folgenden ist auf verschiedene Ausführungen des Zubehöradapters 21 mit Bezug auf die Figuren 2 bis 4 eingegangen.

Jeder der im folgenden beschriebenen Zubehöradapter weist einen fahrzeugradseitigen Befestigungsabschnitt 29 zur Befestigung des Zubehöradapters 21 am Fahrzeugrad 3 und einen Halteabschnitt 31 zur Anbringung des Verbindungsglieds 27 auf. Das Haltemittel 19 ist jeweils im Halteabschnitt 31 angeordnet. Bei den beispielhaft dargestellten Zubehöradaptern 21 sind die Haltemittel 19 jeweils als Bolzen 23 gebildet.

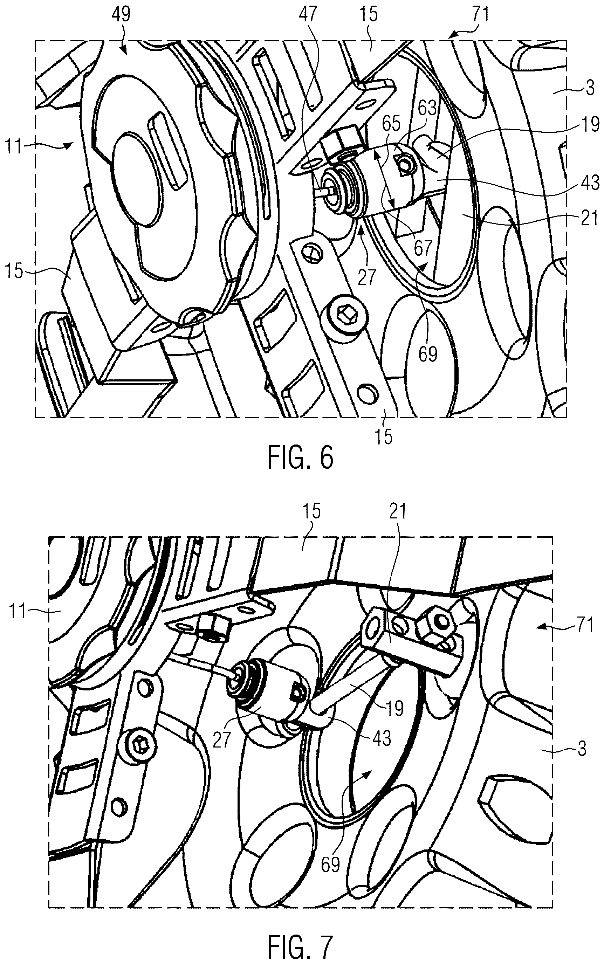

Der in Fig. 2 dargestellte Zubehöradapter 21 kann in seinem Befestigungsabschnitt 29 an einer Radschraube oder einer Radmutter am Fahrzeugrad 3 befestigt werden. Der als Ausleger angebrachte Bolzen 19 ragt dann in einen Mittenbereich, bezogen auf die radiale Richtung R des Fahrzeugrads 3. Der Bolzen 19 kann dabei entlang der radialen Richtung R verlaufen und die axiale Richtung A kreuzen. Dies ist beispielsweise so in Fig. 7 dargestellt.

Der in Fig. 3 schematisch dargestellte Zubehöradapter 21 weist zwei Klemmbacken 33 auf, welche voneinander weg bewegt werden können, um gegen die Innenwandung einer zentralen Bohrung 35 des Fahrzeugrads 3 gepresst zu werden. Ein montierter Zustand dieses Zubehöradapters 21 ist in Fig. 5 dargestellt.

Zwischen den beiden Klemmbacken 33 erstreckt sich das Haltemittel 19, bzw. der Bolzen 23 und verbindet die Klemmbacken 33 miteinander.

Der Bolzen 23 kann auch zum Auseinanderbewegen der beiden Klemmbacken 33 dienen. Dazu können der Bolzen 23 mit einem Außengewinde (nicht dargestellt) und eine der beiden Klemmbacken 33 mit einem entsprechenden Innengewinde versehen sein, mit dem der Bolzen 23 zusammenwirken kann. Die andere Klemmbacke 33 kann mit einer Öffnung versehen sein, in der sich der Bolzen 23 frei drehen lässt. Alternativ dazu kann der Bolzen 23 auch mit zwei gegenläufigen Außengewinden und die beiden Klemmbacken 33 mit entsprechenden Innengewinden versehen sein.

Der in Fig. 4 dargestellte Zubehöradapter 21 dient zur Anbringung an einer mit einem Zentralgewinde versehenen Radfelge oder Radnabe. Dazu weist der Zubehöradapter 21 in seinem Befestigungsabschnitt 29 ein Gewinde 34 auf. Nach dem Einschrauben in das Zentralgewinde kann eine Schraube 35 im Halteabschnitt 31 betätigt werden, die eine Ringscheibe 37 gegen das Fahrzeugrad 3 presst, um ein unbeabsichtigtes Lösen der Schraubverbindung zwischen dem Gewinde 34 und dem Zentralgewinde des Fahrzeugrads 3 zu verhindern.

Im Folgenden ist auf eine erste Ausführungsform des Verbindungsglieds 27 mit Bezug auf die Figuren 5 und 6 eingegangen. In den Figuren 5 und 6 ist das Fahrzeugrad 3 beispielhaft mit einem Zubehöradapter 21 der Fig. 3 dargestellt.

Das Verbindungsglied 27 weist einen Handhabungsabschnitt 39 zur Handhabung durch einen Anwender auf. Insbesondere kann das Verbindungsglied 27 im Handhabungsabschnitt 39 gegriffen werden, um das Verbindungsglied 27 an dem Haltemittel 19 anzubringen, oder von diesem zu lösen.

Von dem Handhabungsabschnitt 39 erstreckt sich, vorzugsweise entlang der axialen Richtung A, ein Einhängeabschnitt 41, an dem das Verbindungsglied 27 am Haltemittel 19 befestigt werden kann. Der Einhängeabschnitt 41 befindet sich an einem radseitigen Ende 42 des Verbindungsgliedes 27. Im Einhängeabschnitt 41 weist das Verbindungsglied 27 einen Haken 43 auf.

Das Verbindungsglied 27 weist ein gleitschutzvorrichtungsseitiges Ende 45 auf, welches dem radseitigen Ende 42 gegenüberliegt. Der Handhabungsabschnitt 39 befindet sich zwischen dem gleitschutzvorrichtungsseitigen Ende 45 und dem radseitigen Ende 42.

In einem am Fahrzeugrad 3 montierten Zustand 71 ist das gleitschutzvorrichtungsseitige Ende 45 der zentralen Befestigungseinrichtung 11 und das radseitige Ende 42 dem Fahrzeugrad 3 zugewandt.

Das Verbindungsglied 27 weist, vorzugsweise am gleitschutzvorrichtungsseitigen Ende 45, ein Verbindungsmittel 47 auf, welches ausgestaltet ist, das Verbindungsglied 27 mit der Gleitschutzvorrichtung 1, insbesondere mit der zentralen Befestigungseinrichtung 11, zu verbinden.

Das Verbindungsmittel 47 kann biegeschlaff sein. Ein biegeschlaffes Verbindungsmittel 47 kann beispielsweise durch ein Seil, eine Kette, einen Gurt oder einen Strang gebildet sein. Lediglich beispielhaft ist das Verbindungsmittel 47 des in den Figuren 5 bis 8 dargestellten Verbindungsglied 27 ein biegeschlaffes Verbindungsmittel 47.

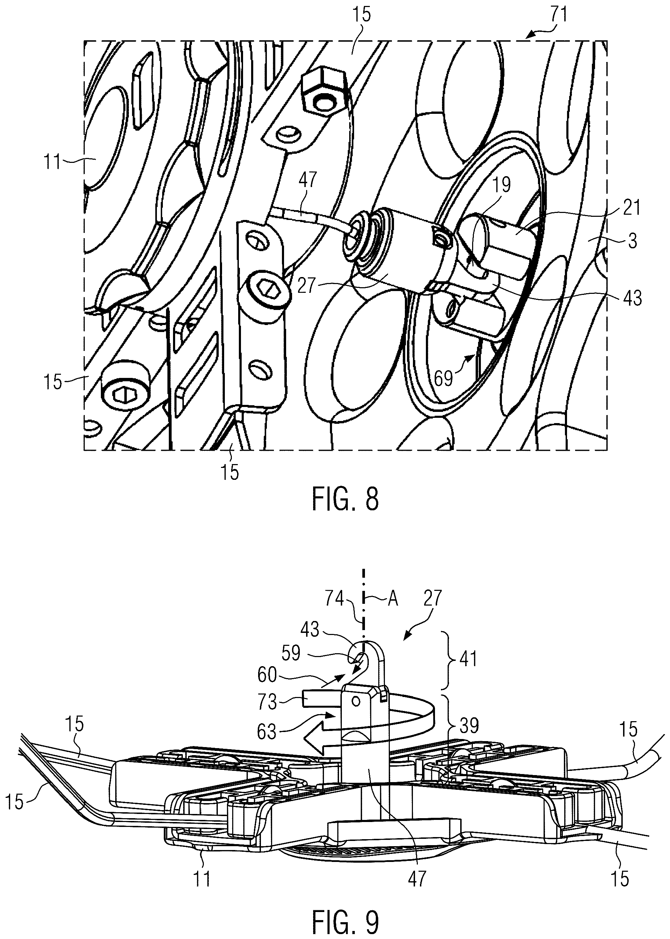

Alternativ zum biegeschlaffes Verbindungsmittel 47 kann das Verbindungsglied 27 mit einem starren Verbindungsmittel 47 verbunden sein. Beispielsweise sind die Verbindungsglieder 27, die in den Figuren 9 bis 18 dargestellt sind, mit starren Verbindungsmitteln 47 versehen. Hierauf ist weiter unten im Detail eingegangen. Ein starres Verbindungsmittel 47 kann beispielsweise durch eine Stange, einen Kasten, einen Hohlzylinder oder eine Rahmenstruktur gebildet sein.

Das Verbindungsmittel 47 ist bevorzugt an der zentralen Befestigungseinrichtung 11 befestigt. Um eine sichere Verbindung des Verbindungsgliedes 27 am Fahrzeugrad 3 zu gewährleisten, kann das Verbindungsmittel 47 im am Haltemittel 19 eingehängten Zustand des Verbindungslieds 27 gespannt werden. Hierzu kann die Gleitschutzvorrichtung 1, vorzugsweise in der zentralen Befestigungseinrichtung 11, mit einer Spannvorrichtung 49 versehen sein, welche dazu ausgestaltet ist, eine Zugkraft 50 auf das Verbindungsglied 27 auszuüben.

Im Falle eines biegeschlaffen Verbindungsmittels 47, kann die Spannvorrichtung 49 beispielsweise dazu ausgestaltet sein, dass Verbindungsmittel 47 in der zentralen Befestigungseinrichtung 11 aufzuwickeln. Das Aufwickeln kann beispielsweise durch Drehen eines Drehgriffs 51 erfolgen, wobei sich eine in der zentralen Befestigungseinrichtung 11 angeordnete Aufwickeleinrichtung (nicht dargestellt) mitdreht, und das biegeschlaffe Verbindungsmittel 47 aufwickelt.

Auch im Falle eines starren Verbindungsmittels 47 kann eine Spannvorrichtung 49 vorgesehen sein, die ausgestaltet ist, eine Zugkraft auf das Verbindungsglied 27 auszuüben. Zum Beispiel kann das starre Verbindungsmittel 47 mit einer Zahnstange oder mit einem Gewinde versehen sein. Die Spannvorrichtung 49 kann mit einem zur Zahnstange passenden Zahnrad oder einer passenden Schnecke versehen sein. Bei einem mit einem Gewinde versehenen Verbindungsmittel 47 kann die Spannvorrichtung 49 mit einem zum Gewinde des Verbindungsmittels 47 passenden Gegengewinde versehen sein.

Im Folgenden ist kurz auf den Haken 43 der ersten Ausführungsform des Verbindungsgliedes 27 eingegangen. Der Haken 43 weist ein Maul 53 auf, welches ausgestaltet ist, das Haltemittel 19 aufzunehmen. Deshalb ist eine Maulweite 55 des Hakens 43 bevorzugt so bemessen, dass das Haltemittel 19 spielfrei oder mit wenig Spiel im Maul 53 aufgenommen werden kann. D.h., die Maulweite 55 ist bevorzugt nur geringfügig größer als ein Durchmesser 57 des Haltemittels 19. Dabei ist die Maulweite 55 bevorzugt weniger als 5 mm, besonders bevorzugt weniger als 2 mm größer als der Durchmesser 57 des Haltemittels 19.

Das Maul 53 kann sich entlang einer Öffnungsrichtung 59 öffnen, die vom radseitigen Ende 42 weg weist. Zwischen der Öffnungsrichtung 59 und der axialen Richtung A kann ein Winkel 61 eingeschlossen sein, welcher bevorzugt weniger als 70°, besonders bevorzugt weniger als 50° beträgt.

Die Öffnungsrichtung 59 gibt eine Montagerichtung 60 vor, welche zur Öffnungsrichtung 59 entgegengesetzt orientiert ist. Entlang der Montagerichtung 60 kann das Haltemittel 19 in das Maul 53 des Hakens 43 geführt werden.

Durch die oben beschriebene Öffnungsrichtung 59 ist gewährleistet, dass sich der Haken 43 nicht selbsttätig vom Haltemittel 19 löst, solange eine Zugkraft auf das Verbindungsglied 27 wirkt.

Um die Montage und die Demontage des Verbindungsgliedes 27 zu erleichtern, ist der Handhabungsabschnitt 39 mit einem ergonomisch ausgestalteten Griff 63 versehen. Dabei kann das Verbindungsglied 27 im Handhabungsabschnitt 39 selbst als Griff 63 geformt sein. Mit ergonomisch ist insbesondere eine ausreichende Dicke 65 des Griffs 63 gemeint, die es erlaubt, das Verbindungsglied 27 auch bei schlechten Witterungsverhältnissen und mit Handschuhen sicher zu greifen. Die Dicke 65 des Griffs 63 ist in Fig. 6 dargestellt.

Die Dicke 65 des Griffs 63 beträgt vorzugsweise mindestens einem zweifachen der Maulweite 55, oder mindestens dem zweifachen des Durchmessers 57 des Haltemittels 19. Die Dicke 65 liegt bevorzugt in einem Größenbereich zwischen 2 und 8 cm, besonders bevorzugt zwischen 3 und 6 cm.

Das Verbindungsglied 27 ist bevorzugt wenigstens im Handhabungsabschnitt 39 zylindrisch geformt. Die Dicke 65 entspricht dann einem Durchmesser 67 der zylindrischen Form. Der Handhabungsabschnitt 39 und der Haken 43 sind bevorzugt so bemessen, dass der Haken 43 in radialer Richtung R nicht über den zylindrischen Handhabungsabschnitt 39 hinausragt.

Zur Befestigung des Verbindungsgliedes 27 am Fahrzeugrad 3 wird die zentrale Befestigungseinrichtung 11 der Gleitschutzvorrichtung 1 so nah zur Radnabe 69 gebracht, dass der Haken 43 des Verbindungsglieds 27 am Haltemittel 19 eingehängt werden kann.

Im Falle eines biegeschlafen Verbindungsmittels 47, welches durch eine Spannvorrichtung 49 aufwickelbar ist, kann das Verbindungsmittel 47 zunächst abgewickelt werden, um die Montage zu erleichtern.

Vorzugsweise ist das Verbindungsglied 27 relativ zur übrigen Gleitschutzvorrichtung 1, insbesondere zur zentralen Befestigungseinrichtung 11, um die axiale Richtung A drehbar ausgestaltet. Dadurch kann der Haken 43 in eine Position gebracht werden, in der er leicht am Haltemittel 19 eingehängt werden kann. Dies ist von Vorteil, da sich das Fahrzeugrad 3, und somit auch das Haltemittel 19, in einer Situation, in der die Gleitschutzvorrichtung 1 montiert werden soll, in der Regel nicht ohne Weiteres drehen lassen.

Zur Beweglichkeit reicht es bereits, wenn lediglich der Einhängeabschnitt 41 drehbar ausgestaltet ist. Dies kann beispielsweise dadurch erreicht werden, dass der Haken 43 gegenüber dem Handhabungsabschnitt 39 drehbar am übrigen Verbindungsglied 27 gehalten ist. Die Drehbarkeit der ersten Ausführungsform des Verbindungsgliedes 27 kann im einfachsten Fall durch die Beweglichkeit des biegeschlafen Verbindungsmittels 47 erreicht werden.

Nach dem Einhängen des Hakens 43 in das Haltemittel 19 kann das Verbindungsmittel 47 durch Aufwickeln wieder gespannt werden. Bei ausreichender Spannung des Verbindungsmittels 47 besteht ein permanenter Zug auf das Verbindungsglied 27. Der Zug wird durch die federelastischen radialen Ausleger 15 erzeugt.

Um einen permanenten Zug im Betrieb zu ermöglichen, ist es vorteilhaft, wenn die radialen Ausleger 15 bei der Montage des Verbindungsglieds 27 vorgespannt werden. Ein montierter Zustand 71 ist in Fig. 6 dargestellt. In diesem Zustand ist die zentrale Befestigungseinrichtung 11 gegenüber der Nabe 69 des Fahrzeugrads 3 angeordnet.

In den Figuren 7 und 8 ist das Verbindungsglied 27 jeweils im montierten Zustand 71 an weiteren beispielhaft dargestellten Zubehöradaptern 21 gezeigt. Dabei zeigt Figur 7 das Verbindungsglied 27 an einem Zubehöradapter der Figur 2, während Figur 8 das Verbindungsglied 27 am Zubehöradapter 21 der Figur 4 zeigt.

Da alle Zubehöradapter 21 in den dargestellten Ausführungsformen mit einem Bolzen 23 als Haltemittel 19 versehen sind, entsprechen die Montage und der montierte Zustand 71 des Verbindungsgliedes 27 am Fahrzeugrad 3 der Montage und dem montierten Zustand 71 der oben mit Bezug auf die Figuren 5 und 6 beschriebenen Ausführungsform des Zubehöradapters 21.

Im Folgenden ist eine zweite vorteilhafte Ausführungsform des Verbindungsgliedes 27 mit Bezug auf die Figuren 9 bis 11 beschrieben. Der Kürze halber ist dabei nur auf die Unterschiede zu der mit Bezug auf die Figuren 5 bis 8 beschriebenen ersten Ausführungsform eingegangen.

Das Verbindungsglied 27 der zweiten Ausführungsform weist ein starres Verbindungsmittel 47 auf. Das Verbindungsmittel 47 fällt bei der zweiten Ausführungsform zumindest abschnittsweise mit dem Handhabungsabschnitt 39 zusammen.

Der Einhängeabschnitt 41 mit dem Haken 43 entspricht im Wesentlichen dem Einhängeabschnitt 41 der oben beschriebenen ersten Ausführungsform. Das Verbindungsmittel 47 ist zumindest abschnittsweise zylindrisch geformt, wobei eine Zylinderachse 74 mit der axialen Richtung A zusammenfällt. Das Verbindungsglied 27 ist um die axiale Richtung A drehbar an der zentralen Befestigungseinrichtung gehalten. Daher lässt sich das Verbindungsglied 27 relativ zur übrigen Gleitschutzvorrichtung 1 um die axiale Richtung A drehen. Dies ist in Fig. 9 durch den Pfeil 73 angedeutet.

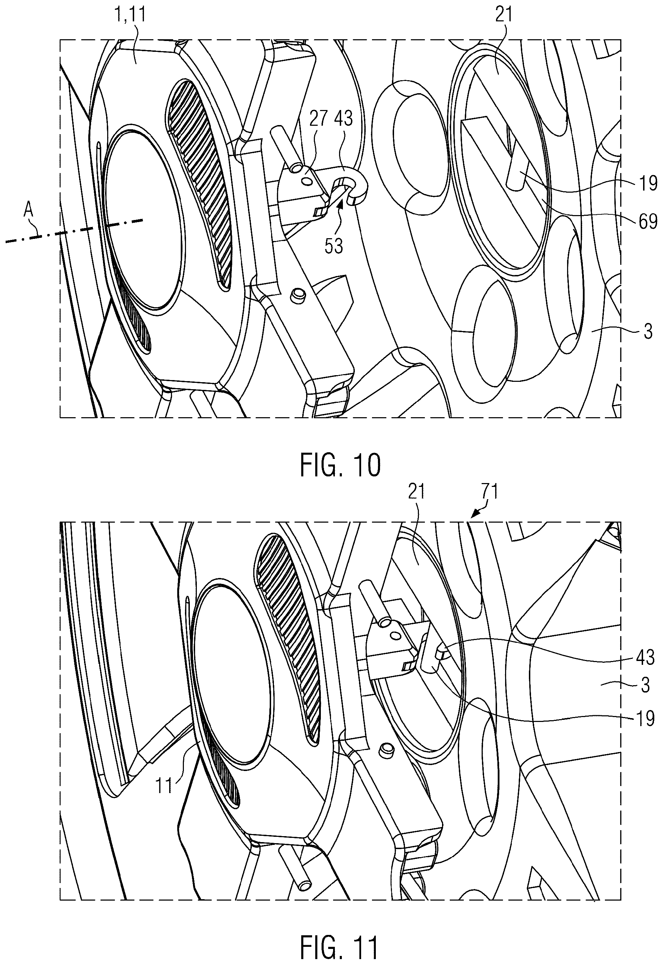

Im Folgenden ist die Montage des Verbindungsgliedes 27 der zweiten Ausführungsform am Fahrzeugrad 3 mit Bezug auf die Figuren 10 und 11 kurz beschrieben. Der Kürze halber wird die Montage der zweiten Ausführungsform des erfindungsgemäßen Verbindungsgliedes 27 nur anhand einer Ausführungsform eines Zubehöradapters 21 beschrieben. Lediglich beispielhaft ist hier ein Zubehöradapter 21 der Fig. 3 zur Darstellung ausgewählt. Die Montage kann auf gleiche Weise bei anderen Zubehöradaptern 21 erfolgen.

Zunächst wird die Gleitschutzvorrichtung 1 so positioniert, dass die zentrale Befestigungseinrichtung 11 gegenüber der Nabe 69 des Fahrzeugrads 3 angeordnet ist. Durch einen Druck auf die zentrale Befestigungseinrichtung 11 entlang der axialen Richtung A in Richtung auf die Radnabe 69 wird das Verbindungsglied 27 in Richtung des Halteorgans 19 bewegt. Dabei oder vorher kann der Haken 43 in eine Position gebracht werden, die eine einfache Verbindung mit dem Haltemittel 19 erlaubt. Hier wirkt sich die Drehbarkeit des Verbindungsgliedes 27 relativ zur restlichen zentralen Befestigungseinrichtung 11 positiv aus. Beispielsweise kann ein Anwender das Verbindungsglied 27 am Handhabungsabschnitt 39 greifen und um die axiale Richtung A drehen. Der Handhabungsabschnitt 39 des Verbindungsgliedes 27 dieser Ausführungsform kann folglich als Griff 63 verwendet werden.

Ist der Haken 43 in der gewünschten Position angeordnet, kann eine weitere Bewegung der zentralen Befestigungseinrichtung 11 zur Radnabe 69 hin den Haken so weit hinter das Haltemittel 19 bewegen, dass dieses im Maul 53 des Hakens 43 aufgenommen werden kann.

Gemäß einer weiteren Verbesserung kann der Haken 43 beweglich mit dem übrigen Verbindungsglied 27 verbunden sein, sodass ein Zurückklappen des Hakens 43 möglich ist, um das Maul 53, bzw. die Öffnungsrichtung 59 des Mauls 53 weiter zur Radnabe 69 hin zu orientieren, um das einhängen des Hakens 43 am Haltemittel 19 zu erleichtern. Der Haken 43 kann zudem mit einem federelastischem Rückstellmechanismus versehen sein, mit dem er wieder in seine Ausgangsposition zurückbewegt werden kann.

Figur 11 zeigt das Verbindungsglied 27 in einem am Haltemittel 19 eingehängten Zustand. Eine Spannung durch eine Spannvorrichtung kann zusätzlich erfolgen, ist aber nicht zwingend notwendig. Es reicht die Spannung durch die federelastischen radialen Ausleger 15 aus. Diese Spannung muss bei der Montage des Verbindungsglied 27 am Haltemittel 19 zunächst durch die Kraftaufwendung auf die zentrale Befestigungseinrichtung 11 aufgebaut werden. Anschließend ist eine Zugspannung erzeugt, welche dafür sorgt, dass das Haltemittel 19 im Maul 53 des Hakens 43 verbleibt.

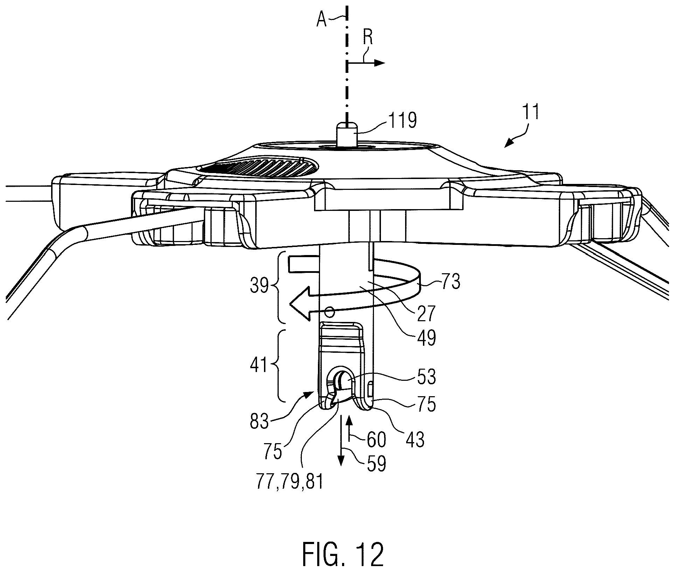

Im Folgenden ist eine dritte vorteilhafte Ausführungsform eines erfindungsgemäßen Verbindungsgliedes 27 mit Bezug auf die Figuren 12 bis 18 beschrieben. Auch hier wird, der Kürze halber, nur auf die Unterschiede zu den zuvor beschriebenen Ausführungsformen eingegangen.

Das Verbindungsglied 27 der dritten Ausführungsform weist ebenfalls ein starres Verbindungsmittel 49 auf, welches vorzugsweise eine insgesamt zylindrische Form aufweist, die sich entlang einer Zylinderachse 74 erstreckt. Vorzugsweise erstreckt sich die Zylinderachse 74 entlang der axialen Richtung A des Verbindungsgliedes 27. Die zylindrische Form erstreckt sich bevorzugt auch über den gesamten Handhabungsabschnitt 39.

Wie die zuvor beschriebene zweite Ausführungsform, ist auch die dritte Ausführungsform des Verbindungsglied 27 um die axiale Richtung A herum drehbar mit der übrigen zentralen Befestigungseinrichtung 11 verbunden.

Insbesondere der Einhängeabschnitt 41 unterscheidet sich von den beiden zuvor beschriebenen Ausführungsformen. Statt eines Hakens 43, welcher sich mit seinem Maul 53 zu einer der Radnabe 69 abgewandten Seite hin öffnet, erstreckt sich die Montagerichtung 60 parallel zur axialen Richtung A und von dem gleitschutzvorrichtungsseitigen Ende 45 des Verbindungsgliedes 27 weg. Die Montagerichtung 60 erstreckt sich entlang der Zylinderachse 74. Mit anderen Worten ist das Maul 53, zumindest während der Montage, zum Haltemittel 19 hin geöffnet.

Das Maul 53 kann von zwei sich in radialer Richtung R gegenüberliegenden Schenkeln 75 aufgespannt sein. Die Schenkel 75 erstrecken sich zumindest ein Stück weit entlang der axialen Richtung A und öffnen das Maul 53 zwischen sich. Die Maulweite 55 ist auch hier bevorzugt so bemessen, dass das Haltemittel 19, vorzugsweise ein Bolzen 23, mit wenig Spiel im Maul 53 aufgenommen werden kann.

Zum radseitigen Ende 42 des Verbindungsgliedes 27 öffnen sich die beiden Schenkel 75 voneinander weg, um eine Führung 76 für das Haltemittel 19 bereitzustellen. Im Bereich der Führung 76 sind die beiden Schenkel 75 bevorzugt angeschrägt oder abgerundet.

Um das Maul 53 schließen zu können, wenn das Haltemittel 19 im Maul 53 aufgenommen ist, weist das Verbindungsglied 27 der dritten Ausführungsform erfindungsgemäß einen Schließmechanismus 77 auf.

Der Schließmechanismus 77 ist dazu ausgestaltet, dass Maul 53 entlang der axialen Richtung A zu schließen, um das Haltemittel 19 im Maul 53 zu halten. Dazu weist der Schließmechanismus 77 einen Schließhaken 79 auf, dessen Spitze 81 das Maul 53 verschließen kann.

In einem geschlossenen Zustand 83 kann das im Maul 53 aufgenommene Haltemittel 19 in radialer Richtung von den beiden Schenkeln 75 und in axialer Richtung A vom Grund 85 des Mauls 53 und der Hakenspitze 81 eingeschlossen sein. Dadurch kann das Haltemittel 19 im geschlossenen Zustand 83 des Hakens 79 formschlüssig im Maul 53 gehalten sein.

Wie oben bereits beschrieben, bilden die Schenkel 75 eine Führung 76 für das Haltemittel 19 und sind an ihren Enden abgerundet. Durch die abgerundete Form ist es möglich, dass sich das Verbindungsglied 27 automatisch dreht, wenn es gegen das Haltemittel 19 gedrückt wird und dabei die Schenkel 75 nicht so angeordnet sind, dass das Haltemittel 19 direkt zwischen sie geführt werden kann.

Ist das Verbindungslied 27 um die axiale Richtung A gegenüber dem Haltemittel 19 so gedreht, dass die Schenkel 75 im Bereich der Führung 76 auf das Haltemittel 19 treffen, und wird das Verbindungsglied 27 weiter gegen das Haltemittel 19 bewegt, so führt die auf die abgerundeten Enden der Schenkel 75 wirkende Kraft zu zur Rotation des Verbindungsglied 27, bis die Schenkel 75 in Bezug auf das Haltemittel 19 so angeordnet sind, dass das Haltemittel 19 in das Maul 53 des Hakens 43 geführt werden kann. Dadurch kann die Montage erleichtert sein. Selbstverständlich kann alternativ oder zusätzlich eine manuelle Ausrichtung in Bezug auf die Drehung des Verbindungsglieds 27 durch einen Anwender am Handhabungsabschnitt 39 erfolgen. Ebenso ist es denkbar, dass zunächst eine grobe Ausrichtung durch einen Anwender und die restliche Ausrichtung durch das Zusammenspiel der Schenkel 75 mit dem Haltemittel 19 erfolgt.

Der Schließmechanismus 77 der dritten erfindungsgemässen Ausführungsform ist bevorzugt ein automatisch schließender Schließmechanismus 77. Zwar ist es auch möglich, den Schließhaken 79 des Schließmechanismus 77 manuell zu schließen, sobald das Haltemittel 19 im Maul 53 angeordnet ist, ein automatisches Schließen ist jedoch anwendungsfreundlicher.

Daher ist der Schließmechanismus 77 als eine Schließfalle 87 ausgestaltet, die ausgestaltet ist, dass Maul 53 selbsttätig zu schließen. Die Schließfalle 87 ist bevorzugt eine Hakenfalle 89, die zum automatischen Schließen des Hakens 79 ausgestaltet ist.

Dazu ist der Schließhaken 79 drehbar um eine Achse 91 gelagert. Die Achse 91 erstreckt sich quer zur axialen Richtung A und parallel zu einer Durchgangsrichtung 93, entlang der das Maul 53 des Hakens 43 durchgängig geöffnet ist. Diese Durchgangsrichtung 93 ist, im montierten Zustand 71 bevorzugt parallel zu einer Achsrichtung 95 des Haltemittels 19.

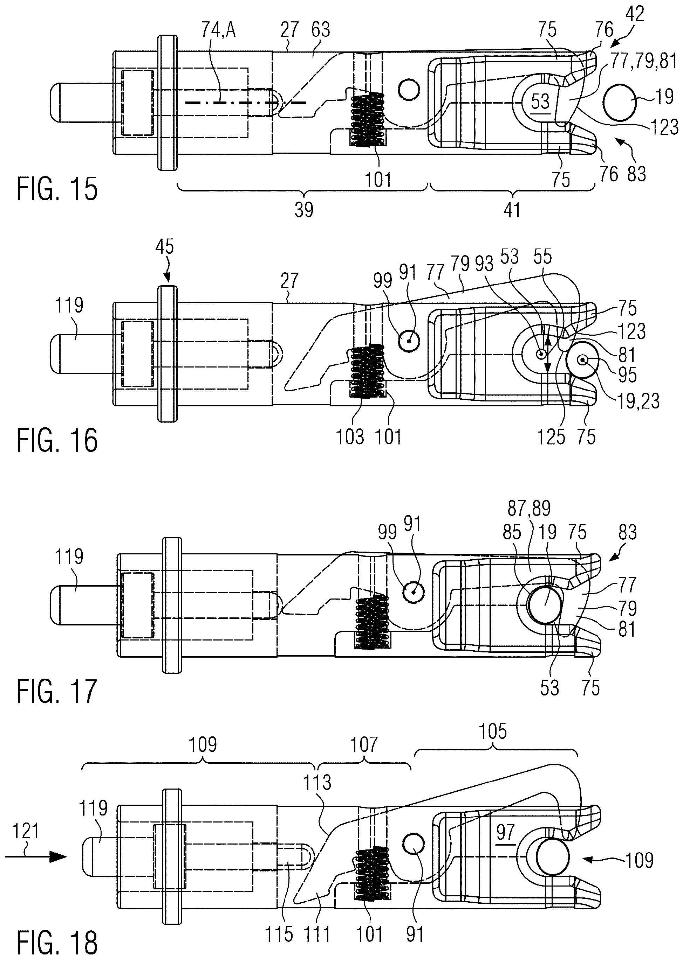

Bevorzugt erstreckt sich die Hakenspitze 81 senkrecht zur Achse 91 und im Wesentlichen senkrecht zur Zylinderachse 74. Eine Drehung des Hakens 79 um die Achse 91 führt zum Herausbewegen der Hakenspitze 81 aus dem Maul 53, sodass das Maul 53 geöffnet ist. Dies ist beispielsweise in Figur 18 dargestellt.

Der Schließhaken 79 ist bevorzugt zumindest abschnittsweise im Inneren des zylindrischen Verbindungsglieds 27 angebracht. Das Verbindungsglied 27 kann mit einer Ausnehmung 97 versehen sein, welche sich schlitzförmig durch das Verbindungsglied 27 erstreckt um den Schließhaken 79 aufzunehmen.

Die Ausnehmung 97 öffnet sich an wenigstens einem der Schenkel hin zum Maul 53 des Hakens 42, um die Bewegung der Hakenspitze 81 in das Maul 53 zu erlauben. Die Ausnehmung 97 erstreckt sich bevorzugt mittig durch das Verbindungsglied 27 und quer zur Achse 91. Im Bereich der Achse 91 kann ein Stift 99 oder ein anderes geeignetes Mittel quer durch die Ausnehmung 97 ragen, sodass der Schließhaken 79 daran drehbar aufgehängt sein kann.

Bevorzugt ist der Schließhaken 79 mit einem automatischen Rückstellmechanismus 101 verbunden, welcher den Schließhaken 79 in Richtung des geschlossenen Zustands 83 bewegen kann. Mit anderen Worten kann der Rückstellmechanismus 101 den Schließmechanismus 77 in eine Vorzugsposition zurückbewegen. Der Rückstellmechanismus 101 weist dazu ein federelastisches Element 103, insbesondere eine Stahlfeder, auf, welche mit dem Schließhaken 79 zusammenwirken kann, um diesen in die Vorzugsposition zu bewegen. Die Vorzugsposition entspricht dem geschlossenen Zustand 83.

Der Schließhaken 79, bzw. der Schließmechanismus 77 weist einen Schließabschnitt 105 und einen Betätigungsabschnitt 107 auf, wobei sich die beiden Abschnitte 105 und 107 in axialer Richtung A über die Achse 91 gegenüberliegen.

Der Schließabschnitt 105 umfasst die Hakenspitze 81. Im Betätigungsabschnitt 107 ist der Schließhaken 79 mit dem Rückstellmechanismus 101 verbunden. Mit anderen Worten ist der Schließhaken 79 dort in Kontakt mit dem Rückstellmechanismus 101. Ein Auslenken des Schließhakens 79 aus dem geschlossenen Zustand 83 heraus führt zum Aufbau einer Federspannung bzw. einer Rückstellkraft im Rückstellmechanismus 101. Wenn keine äußere Kraft auf den Schließhaken 79 wirkt, bewirkt diese Rückstellkraft das Zurückstellen des Schließhakens 79 in den geschlossenen Zustand 83.

Um das Lösen des Schließhakens 79 vom Haltemittel 19 zu erleichtern, ist das Verbindungsglied 27 mit einem Öffnungsmechanismus 109 versehen. Zum Öffnungsmechanismus 109 gehört ein rückwärtiges Ende 111 des Schließhakens 79 im Betätigungsabschnitt 107, welches mit einer Anlaufschräge 113 versehen ist. Das Verbindungsmittel 27 ist zudem mit einem Übertragungselement 115, insbesondere einem Bolzen 117, versehen, welcher entlang der Zylinderachse 74 und gegen die Anlaufschräge 113 beweglich im Verbindungsglied 27 gehalten ist.

Eine Bewegung des Übertragungselements 115 in Richtung auf den Schließhaken 79 führt zu einem Druck des Übertragungselements 115 gegen die Anlaufschräge 113. Dadurch wird der Schließhaken 79 um die Achse 91 gedreht und die Hakenspitze 81 aus dem Maul 53 bewegt. Dies ist beispielsweise in Figur 18 dargestellt.

Um die Betätigung des Öffnungsmechanismus 109 zu erleichtern, ist das Verbindungsglied mit einem von außen zugänglichen Betätigungsmittel 119 versehen. Das Betätigungsmittel 119 kann als ein Knopf, ein Stift, ein Bolzen, oder ein Hebel gebildet sein, welcher von außen betätigbar und kraftübertragend mit dem Übertragungselement 115 gekoppelt ist. Im einfachsten Fall ist das Betätigungsmittel 119 einstückig mit dem Übertragungselement 115 gebildet.

Der Pfeil 121 in Figur 18 verdeutlicht dies. Wird das Betätigungsmittel 119 in Richtung des Pfeils 121 betätigt, also in das übrige Verbindungsmittel 27 reingedrückt, so überträgt das Übertragungselement 115 diese Bewegung an das rückwärtige Ende 111 des Schließhakens 79. Dies führt zu Drehung des Schließhakens 78 um die Achse 91 und zum Herausheben der Hakenspitze 81 aus dem Maul 53.

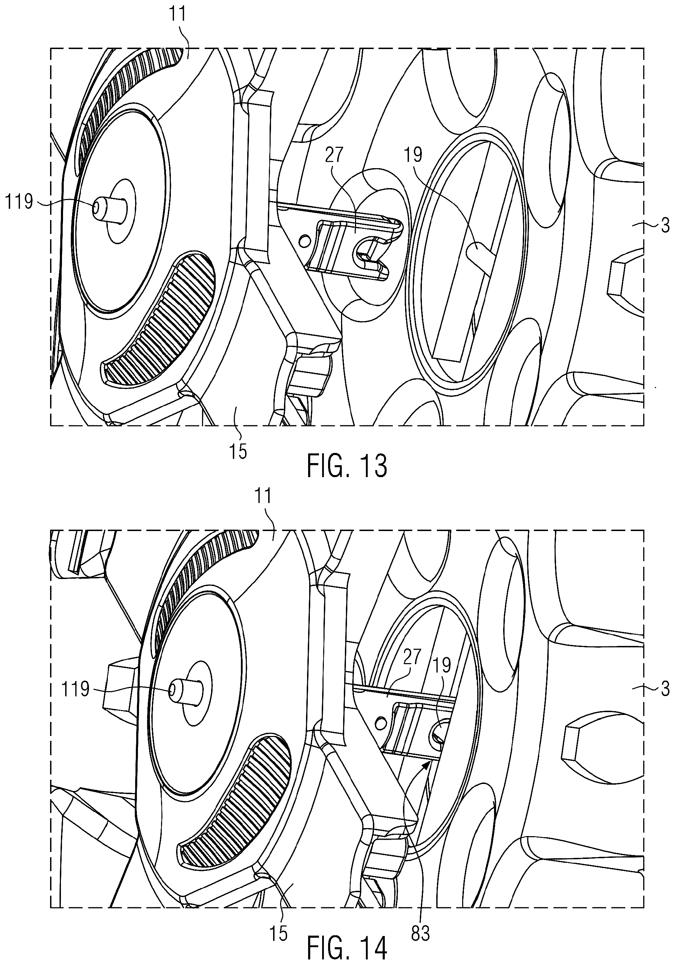

Besonders bevorzugt ist das Betätigungsmittel 119 von außerhalb der zentralen Befestigungseinrichtung 11 betätigbar. Dazu kann das Betätigungsmittel 119 an einer der Radnabe 69 abgewandten Seite der Gleitschutzvorrichtung 1 aus der zentralen Befestigungseinrichtung 11 herausragen. Dies ist beispielsweise in den Figuren 12 und 13 dargestellt.

Zur Verbindung der dritten erfindungsgemäßen Ausführungsform des Verbindungsmittels 27 wird ähnlich vorgegangen wie bei der zweiten Ausführungsform. Mit anderen Worten wird die Gleitschutzvorrichtung 1 so in Richtung auf die Radnabe 69 bewegt, dass das Maul 53 zum Haltemittel 19 geführt wird. Zuvor kann das Verbindungsglied 27 durch eine manuelle Drehung am Handhabungsabschnitt 39 zur erleichterten Verbindung mit dem Haltemittel 19 ausgerichtet werden. Aufgrund der abgerundeten Schenkel 57 und der Führung 76 ist dies jedoch nicht zwingend erforderlich.

Sobald das Haltemittel 19 gegen den Schließhaken 79 bewegt wird, wird dieser aus dem geschlossenen Zustand 83 herausgehoben, da die Hakenspitze 81 mit einer angeschrägten Außenfläche 123 versehen ist. Die Außenfläche 123 verläuft dabei zumindest mit einem Anteil zum gleitschutzvorrichtungsseitigen Ende 45 hin, wobei der Verlauf der angeschrägten Au-ßenfläche 123 anschließend in das freie Ende 125 der Hakenspitze 81 übergeht. Dadurch kann das Haltemittel 19 entlang der Außenfläche 123 gleiten, bis das freie Ende 125 erreicht ist. In diesem Zustand kann das Haltemittel 19 zwischen einem Schenkel 75 und dem freien Ende 125 der Hakenspitze 81 durchgeführt werden. Dies ist in Figur 16 dargestellt.

Beim Anheben des Schließhakens 79 wird eine Rückstellkraft im Rückstellmechanismus 101 erzeugt. Eine weitere Bewegung des Verbindungsgliedes 27 gegen das Haltemittel 19 führt zur vollständigen Öffnung des Mauls 53 und erlaubt es, das Haltemittel 19 bis zum Grund 85 des Mauls 53 zu führen. Wenn das Haltemittel 19 im Maul 53 aufgenommen ist, wirkt keine Kraft durch das Haltemittel 19 auf den Schließhaken 79 und der Rückstellmechanismus 101 kann den Haken zurück in den geschlossenen Zustand 83 bewegen. Zum Lösen des Verbindungsmittels 27 kann, wie oben beschrieben, das Betätigungsmittel 119 betätigt werden, um das Maul 53 wieder zu öffnen.

### Bezugszeichen

- 1: Gleitschutzvorrichtung
- 3: Fahrzeugrad
- 5: Schneekette
- 7: Laufnetz
- 9: Lauffläche
- 11: zentrale Befestigungseinrichtung
- 13: Mitte
- 15: radialer Ausleger
- 17: Ende des Auslegers
- 19: Haltemittel
- 21: Zubehöradapter
- 23: Bolzen
- 25: Satz
- 27: Verbindungsglied
- 29: Befestigungsabschnitt
- 31: Halteabschnitt
- 33: Klemmbacke
- 34: Gewinde
- 35: Schraube
- 37: Ringscheibe
- 39: Handhabungsabschnitt
- 41: Einhängeabschnitt
- 42: radseitigen Ende
- 43: Haken
- 45: gleitschutzvorrichtungsseitiges Ende
- 47: Verbindungsmittel
- 49: Spannvorrichtung
- 50: Zugkraft
- 51: Drehgriff
- 53: Maul
- 55: Maulweite
- 57: Durchmesser des Haltemittels
- 59: Öffnungsrichtung
- 60: Montagerichtung
- 61: Winkel
- 63: Griff
- 65: Dicke
- 67: Durchmesser
- 69: Radnabe
- 71: Montierter Zustand
- 73: Pfeil
- 74: Zylinderachse
- 75: Schenkel
- 77: Schließmechanismus
- 79: Schließhaken
- 81: Hakenspitze
- 83: geschlossener Zustand
- 85: Grund des Mauls
- 87: Schließfalle
- 89: Hakenfalle
- 91: Achse
- 93: Durchgangsrichtung
- 95: Achsrichtung des Haltemittels
- 97: Ausnehmung
- 99: Stift
- 101: Rückstellmechanismus
- 103: Federelastisches Element
- 105: Schließabschnitt
- 107: Betätigungsabschnitt
- 109: Öffnungsmechanismus
- 111: Rückwärtiges Ende
- 113: Anlaufschräge
- 115: Übertragungselement
- 117: Bolzen
- 119: Betätigungsmittel
- 121: Pfeil
- 123: Außenfläche
- 125: Freies Ende der Hakenspitze

## Patentansprüche

1. Verbindungsglied (27) zur Befestigung einer Gleitschutzvorrichtung (1) an einem Fahrzeugrad (3), wobei das Verbindungsglied (27) einen zur Handhabung durch einen Anwender ausgestalteten Handhabungsabschnitt (39) und einen zur Anbringung des Verbindungsglieds (27) am Fahrzeugrad (3) ausgestalteten Einhängeabschnitt (41) aufweist, wobei der Einhängeabschnitt (41) an einem radseitigen Ende (42) des Verbindungsglieds (27) angeordnet ist und einen Haken (43) aufweist, wobei der Handhabungsabschnitt (39) sich zwischen dem Einhängeabschnitt (41) und einem dem radseitigen Ende (42) gegenüberliegenden gleitschutzvorrichtungsseitigen Ende (45) des Verbindungsglieds (27) befindet, **dadurch gekennzeichnet, dass** der Haken (43) ein Maul (53) zur Aufnahme des einen Abschnitts (19) des Fahrzeugrads (3) und einen Schließmechanismus (77) zum Schließen des Mauls (53) aufweist.

2. Verbindungsglied (27) nach Anspruch 1, wobei das Verbindungsglied (27) mit wenigstens einem Verbindungsmittel (47) versehen ist, das ausgestaltet ist, das Verbindungsglied (27) mit der Gleitschutzvorrichtung (1) zu verbinden.

3. Verbindungsglied (27) nach Anspruch 2, wobei das Verbindungsmittel (47) biegeschlaff oder starr ist.

4. Verbindungsglied (27) nach einem der Ansprüche 1 bis 3, wobei der Haken (43) des Verbindungsgliedes (27) als Schnapphaken ausgestaltet ist.

5. Verbindungsglied (27) nach einem der Ansprüche 1 bis 3, wobei der Schließmechanismus (77) eine Schließfalle (87) zum automatischen Schließen des Mauls (53) umfasst.

6. Verbindungsglied (27) nach Anspruch 5, wobei die Schließfalle (87) eine Hakenfalle (89) ist.

7. Verbindungsglied (27) nach einem der Ansprüche 1 bis 6, wobei der Schließmechanismus (77) mit einem Öffnungsmechanismus (109) verbunden ist, der ausgestaltet ist, das Maul (53) des Hakens (43) zu öffnen.

8. Verbindungsglied (27) nach Anspruch 7, wobei der Öffnungsmechanismus (109) wenigstens ein von außen zugängliches Betätigungsmittel (119) umfasst.

9. Verbindungsglied (27) nach einem der Ansprüche 1 bis 8, wobei der Haken (43) ein Maul (53) aufweist, das zu einer vom Handhabungsabschnitt (39) wegweisenden Montagerichtung (60) hin offen ist.

10. Verbindungsglied (27) nach einem der Ansprüche 1 bis 9, wobei das Verbindungsglied (27) im Handhabungsabschnitt (39) einen ergonomisch ausgestalteten Griff (63) aufweist.

11. Verbindungsglied (27) nach einem der Ansprüche 1 bis 10, wobei der Handhabungsabschnitt (39) im Wesentlichen zylindrisch ist und wobei der Haken (43) in einer radialen Richtung (R) nicht über den Handhabungsabschnitt (39) hinausragt.

12. Gleitschutzvorrichtung (1) für ein Fahrzeugrad (3), wobei die Gleitschutzvorrichtung (1) eine zentrale Befestigungseinrichtung (11), die im auf dem Fahrzeugrad (3) montierten Zustand (71) gegenüber einer Nabe (69) des Fahrzeugrads (3) angeordnet ist und ein Verbindungsglied (27) nach einem der Ansprüche 1 bis 11 aufweist.

13. Gleitschutzvorrichtung (1) nach Anspruch 12, wobei die zentrale Befestigungseinrichtung (11) eine Spannvorrichtung (49) umfasst, die ausgestaltet ist, eine Zugkraft (50) auf das Verbindungsglied (27) auszuüben.

14. Gleitschutzvorrichtung (1) nach Anspruch 12 oder 13, wobei das Verbindungsglied (27), zumindest mit seinem Einhängeabschnitt (41), und die restliche Gleitschutzvorrichtung (1) um eine axiale Richtung (A) relativ zueinander drehbar ausgestaltet sind.

15. Satz (25) umfassend eine Gleitschutzvorrichtung (1) nach einem der Ansprüche 12 bis 14 und einen Zubehöradapter (21) zur Montage an einem Fahrzeugrad (3) oder eine Radnabe (69), wobei der Zubehöradapter (21) wenigstens ein Haltemittel (19) aufweist, das zur Verbindung mit dem Haken (43) des Verbindungsglieds (27) der Gleitschutzvorrichtung (1) ausgestaltet ist.

## Claims

1. A connection member (27) for fastening an anti-skid device (1) to a vehicle wheel (3), wherein the connection member (27) has a handling portion (39) configured for handling by a user and a hooking-in portion (41) configured for attaching the connection member (27) to the vehicle wheel (3), wherein the hooking-in portion (41) is arranged on a wheel-side end (42) of the connection member (27) and has a hook (43), wherein the handling portion (39) is located between the hooking-in portion (41) and an anti-skid device-side end (45), located opposite the wheel-side end (42), of the connection member (27), **characterised in that** the hook (43) has a mouth (53) for receiving the one portion (19) of the vehicle wheel (3) and a closing mechanism (77) for closing the mouth (53).

2. A connection member (27) according to claim 1, wherein the connection member (27) is provided with at least one connection means (47) which is configured to connect the connection member (27) to the anti-skid device (1).

3. A connection member (27) according to claim 2, wherein the connection means (47) is flexible or rigid.

4. A connection member (27) according to one of claims 1 to 3, wherein the hook (43) of the connection member (27) is configured as a snap hook.

5. A connection member (27) according to one of claims 1 to 3, wherein the closing mechanism (77) comprises a closing latch (87) for automatically closing the mouth (53).

6. A connection member (27) according to claim 5, wherein the closing latch (87) is a hook latch (89).

7. A connection member (27) according to one of claims 1 to 6, wherein the closing mechanism (77) is connected to an opening mechanism (109) which is configured to open the mouth (53) of the hook (43).

8. A connection member (27) according to claim 7, wherein the opening mechanism (109) comprises at least one actuating means (119) which is accessible from the outside.

9. A connection member (27) according to one of claims 1 to 8, wherein the hook (43) has a mouth (53) which is open towards a mounting direction (60) which points away from the handling portion (39).

10. A connection member (27) according to one of claims 1 to 9, wherein the connection member (27) has an ergonomically configured grip (63) in the handling portion (39).

11. A connection member (27) according to one of claims 1 to 10, wherein the handling portion (39) is substantially cylindrical and wherein the hook (43) in a radial direction (R) does not protrude beyond the handling portion (39).

12. An anti-skid device (1) for a vehicle wheel (3), wherein the anti-skid device (1) has a central fastening means (11) which, in the state (71) mounted on the vehicle wheel (3), is arranged opposite a hub (69) of the vehicle wheel (3) and has a connection member (27) according to one of claims 1 to 11.

13. An anti-skid device (1) according to claim 12, wherein the central fastening means (11) comprises a tensioning device (49) which is configured to exert a tensile force (50) on the connection member (27).

14. An anti-skid device (1) according to claim 12 or 13, wherein the connection member (27), at least with its hooking-in portion (41), and the rest of the anti-skid device (1) are configured to be rotatable relative to each other about an axial direction (A).

15. A set (25) comprising an anti-skid device (1) according to one of claims 12 to 14 and an accessory adapter (21) for mounting on a vehicle wheel (3) or a wheel hub (69), wherein the accessory adapter (21) has at least one holding means (19) which is configured for connecting to the hook (43) of the connection member (27) of the anti-skid device (1).

## Revendications

1. Élément de connexion (27) pour la fixation d'un dispositif antidérapant (1) sur une roue de véhicule (3), dans lequel l'élément de connexion (27) comporte une section de manipulation (39) configurée pour être manipulée par un utilisateur et une section d'accrochage (41) configurée pour monter l'élément de connexion (27) sur la roue de véhicule (3), dans lequel la section d'accrochage (41) est agencée sur une extrémité côté roue (42) de l'élément de connexion (27) et comporte un crochet (43), dans lequel la section de manipulation (39) se trouve entre la section d'accrochage (41) et une extrémité côté dispositif antidérapant (45) opposée à l'extrémité côté roue (42) de l'élément de connexion (27), **caractérisé en ce que** le crochet (43) comporte une bouche (53) pour recevoir une section (19) de la roue de véhicule (3) et un mécanisme de fermeture (77) pour fermer la bouche (53).

2. Élément de connexion (27) selon la revendication 1, dans lequel l'élément de connexion (27) est pourvu d'au moins un moyen de connexion (47) configuré pour connecter l'élément de connexion (27) au dispositif antidérapant (1).

3. Élément de connexion (27) selon la revendication 2, dans lequel le moyen de connexion (47) est flexible ou rigide.

4. Élément de connexion (27) selon l'une des revendications 1 à 3, dans lequel le crochet (43) de l'élément de connexion (27) est configuré sous forme d'un mousqueton.

5. Élément de connexion (27) selon l'une des revendications 1 à 3, dans lequel le mécanisme de fermeture (77) comprend un loquet de fermeture (87) pour fermer automatiquement la bouche (53).

6. Élément de connexion (27) selon la revendication 5, dans lequel le loquet de fermeture (87) est un loquet à crochet (89).

7. Élément de connexion (27) selon l'une des revendications 1 à 6, dans lequel le mécanisme de fermeture (77) est connecté à un mécanisme d'ouverture (109) configuré pour ouvrir la bouche (53) du crochet (43) .

8. Élément de connexion (27) selon la revendication 7, dans lequel le mécanisme d'ouverture (109) comprend au moins un moyen d'actionnement (119) accessible de l'extérieur.

9. Élément de connexion (27) selon l'une des revendications 1 à 8, dans lequel le crochet (43) comporte une bouche (53) ouverte dans une direction de montage (60) dirigée à l'opposé de la section de manipulation (39).

10. Élément de connexion (27) selon l'une des revendications 1 à 9, dans lequel l'élément de connexion (27) présente une poignée ergonomique (63) dans la section de manipulation (39).

11. Élément de connexion (27) selon l'une des revendications 1 à 10, dans lequel la partie de manipulation (39) est sensiblement cylindrique et le crochet (43) ne dépasse pas au-delà de la section de manipulation (39) en direction radiale (R).

12. Dispositif antidérapant (1) pour une roue de véhicule (3), dans lequel le dispositif antidérapant (1) comporte un dispositif de fixation central (11) qui, à l'état monté (71) sur la roue de véhicule (3), est agencé en face d'un moyeu (69) de la roue de véhicule (3), et un élément de connexion (27) selon l'une des revendications 1 à 11.

13. Dispositif antidérapant (1) selon la revendication 12, dans lequel le dispositif de fixation central (11) comprend un dispositif de mise sous tension (49) qui est configuré pour exercer une force de traction (50) sur l'élément de connexion (27).

14. Dispositif antidérapant (1) selon la revendication 12 ou 13, dans lequel l'élément de connexion (27), au moins par sa section d'accrochage (41), et le reste du dispositif antidérapant (1) sont configurés pour pouvoir tourner l'un par rapport à l'autre en direction axiale (A) .

15. Ensemble (25) comprenant un dispositif antidérapant (1) selon l'une des revendications 12 à 14 et un adaptateur d'accessoire (21) destiné à être monté sur une roue de véhicule (3) ou un moyeu de roue (69), dans lequel l'adaptateur d'accessoire (21) comporte au moins un moyen de maintien (19) qui est configuré pour être connecté au crochet (43) de l'élément de liaison (27) du dispositif antidérapant (1).
